# EUROPÄISCHE PATENTSCHRIFT

(11) **EP 1 998 932 B1**
(45) Veröffentlichungstag und Bekanntmachung des Hinweises auf die Patenterteilung: **29.12.2010**
(21) Anmeldenummer: 07722993.8
(22) Anmeldetag: 02.03.2007
(51) Int. Cl.: B23Q 17/00

(54) **FUTTERKÖRPER FÜR EIN SPANNFUTTER, SPANNFUTTER UND VERFAHREN ZUR ERMITTLUNG EINER SPANNKRAFT AN EINEM SOLCHEN SPANNFUTTER**
CHUCK BODY FOR A CLAMPING CHUCK, CLAMPING CHUCK AND METHOD FOR DETERMINING A CLAMPING FORCE ON SUCH A CLAMPING CHUCK
CORPS DE MANDRIN POUR UN MANDRIN DE SERRAGE, MANDRIN DE SERRAGE ET DISPOSITIF DE DETERMINATION D'UNE FORCE DE SERRAGE SUR UN TEL MANDRIN DE SERRAGE

(30) Priorität: 16.03.2006 DE 102006013935
(43) Veröffentlichungstag der Anmeldung: 10.12.2008
(73) Patentinhaber: HAINBUCH GMBH SPANNENDE TECHNIK, D-71672 Marbach (DE)
(72) Erfinder: WELLER, Hans-Michael, 71563 Affalterbach (DE); MANDARELLO, Attilio, 71563 Affalterbach (DE)
(74) Vertreter: Patentanwälte Ruff, Wilhelm, Beier, Dauster & Partner
(86) Internationale Anmeldenummer: PCT/EP2007/001793
(87) Internationale Veröffentlichungsnummer: WO 2007/104438

(56) Entgegenhaltungen:
- EP-A1- 0 491 259
- WO-A-02/42025
- WO-A-2005/110649
- DE-A1- 3 212 759
- DE-A1- 19 906 803

## Beschreibung

Die Erfindung betrifft ein Verfahren zur Ermittlung einer Spannkraft an einem Spannfutter zum Spannen eines Werkstücks, mit einem im Wesentlichen rotationssymmetrisch gestalteten Grundkörper, an dem eine konusabschnittsförmig gestaltete Aufnahmeöffnung vorgesehen ist, die für eine kraftübertragende Aufnahme eines Spannkopfs gestaltet.

Die DE 100 57 977 A1 beschreibt ein Spannfutter mit einem Futterkörper, der eine Innenkonusfläche zur Aufnahme eines Spannkopfs aufweist. Der Spannkopf hat eine zumindest abschnittsweise konusförmige Außenkontur, die auf den Futterkörper abgestimmt ist, und ist durch mehrere Trennschlitze in einzelne Spannbacken unterteilt, die mittels elastischer Verbindungselemente relativbeweglich miteinander gekoppelt sind. Durch Ausübung einer axial gerichteten Zugkraft auf den Spannkopf kann dieser in dem Futterkörper festgelegt werden, wobei durch die ausgeübte Zugkraft eine radial nach innen gerichtete Relativbewegung der Spannbacken stattfindet, die zu einer Verengung eines von den Spannbacken begrenzten, freien Durchmessers führt, so dass im freien Durchmesser zwischen den Spannbacken ein Werkstück gespannt werden kann.

Die WO 02/42025 A offenbart einen Futterkörper für ein Spannfutter zum Spannen eines Werkzeugs.

Die WO 2005/110649 A zeigt ein weiteres Spannfutter mit Futterkörper, wobei an einem Grundkörper des Spannfutters ein Deformationssensor zur Ermittlung einer Deformation des Grundkörpers in Umfangsrichtung vorgesehen ist. Daraus kann auf die Spannkraft des Spannfutters geschlossen werden. Der Deformationssensor ist außen am Grundkörper angebracht.

Die EP-A1-0 491 259 beschreibt ein Spannfutter mit einem Dehnmessstreifen zur Überwachung von Spannkräften in dem Spannfutter. Die Information von dem Dehnmessstreifen wird drahtlos bzw. berührungslos in eine Auswerteelektronik übertragen. Des Weiteren wird darin offenbart, dass es üblich ist, die Deformationen eines Spannfutters beim Still- . stand einerseits und bei der Drehbewegung andererseits zu messen und zu vergleichen. Daraus kann ein Spannkraftverlust wegen der Fliehkräfte während der Drehbewegung ermittelt werden.

Derartige Spannfutter werden aufgrund ihrer Spannpräzision und ihrer vorteilhaften automatischen Ansteuerbarkeit vorzugsweise in der Massenproduktion, insbesondere von Dreh- und Frästeilen, eingesetzt und müssen unter rauhen Umgebungsbedingungen über einen langen Zeitraum funktionieren, ohne eine Mindestspannkraft zu unterschreiten. Bei einem bekannten Einsatzfall für ein Spannfutter wird nach einer vorgebbaren Anzahl von durchgeführten Bearbeitungszyklen, insbesondere Dreh- oder Fräsvorgängen, bei denen das Spannfutter zum Spannen von Werkstücken eingesetzt wurde, das Spannfutter gewartet, da ansonsten die Spannkraft unter eine Mindestspannkraft absinken kann. Bei dieser Wartung wird der Spannkopf aus dem Futterkörper ausgebaut, Spannkopf und Futterkörper werden gereinigt, mit frischem Schmiermittel versehen, sowie anschließend wieder zusammengebaut. Dabei kann der Fall auftreten, dass eine Wartung des Spannfutters aufgrund ungünstiger Umgebungsbedingungen bereits überfällig gewesen wäre und die letzten Bearbeitungszyklen bereits mit einer Spannkraft durchgeführt wurden, die unterhalb der Mindestspannkraft lag. Bei günstigen Umgebungsbedingungen kann hingegen der Fall eintreten, dass eine Wartung des Spannfutters zu einem Zeitpunkt vorgenommen wird, zu dem sie noch nicht erforderlich war. Erheblichen Einfluss auf den Wartungsbedarf eines Spannfutters haben Verschmutzungen und hohe Temperaturen, die zu bedingt durch Schmutzpartikel und/oder Umwandlungsvorgänge im Schmiermittel zu einer raschen Erhöhung der Reibung zwischen Spannkopf und Futterkörper führen können und die somit die Spannkraft auf das Werkstück negativ beeinflussen.

### Aufgabe und Lösung

Der Erfindung liegt die Aufgabe zugrunde ein eingangs genanntes Verfahren zu schaffen, mit dem die Probleme des Standes der Technik vermieden werden können und eine Spannkraft des Spannfutters ermittelt werden kann.

Diese Aufgabe wird gelöst durch ein Verfahren mit den Merkmalen des Anspruchs 1 oder 2. Vorteilhafte sowie bevorzugte Ausgestaltungen der Erfindung sind Gegenstand der weiteren Ansprüche und werden im Folgenden näher erläutert. Der Wortlaut der Ansprüche wird durch die ausdrückliche Bezugnahme zum Inhalt der Beschreibung gemacht.

Es ist vorgesehen, dass am Grundkörper des Futterkörpers ein Deformationssensor angebracht ist, der für eine Ermittlung einer Deformation des Grundkörpers in einer Umfangsrichtung vorgesehen und ausgebildet ist. Der Futterkörper, der typischerweise im Wesentlichen rotationssymmetrisch ausgeführt ist, dient zur Kraftübertragung zwischen einer Maschinenspindel einer Werkzeugmaschine und dem Spannkopf, der seinerseits die erforderlichen Spannkräfte auf das Werkstück ausüben soll. Bei einem Spannfutter wird mittels eines der Maschinenspindel zugeordneten Zugrohrs eine Zugkraft auf den Spannkopf ausgeübt, die zu einer Verkeilung der konusabschnittförmigen Bereiche des Spannkopfs und des Futterkörpers führt. Bei dieser Verkeilungsbewegung wird einerseits die gewünschte Verengung des freien Durchmessers zwischen den Spannbacken des Spannkopfes bewirkt. Andererseits erfolgt durch die zwischen Spannkopf und Futterkörper hervorgerufenen Reaktionskräfte auch eine Ausdehnung des Futterkörpers in radialer Richtung nach außen, also eine Zunahme eines Durchmessers des Futterkörpers. Diese Durchmesserzunahme ist abgängig von der geometrischen Gestaltung des Spannkopfs und des Futterkörpers sowie von der Zugkraft, die auf den Spannkopf ausgeübt wird. Sie ist jedoch auch abhängig von der Reibung zwischen Spannkopf und Futterkörper, die durch äußere Umstände wie die Verschmutzung und/oder die Verharzung des Schmiermittels zwischen Spannkopf und Futterkörper bestimmt wird.

Bei konstanter Zugkraft auf den Spannkopf und zunehmender Reibung zwischen Spannkopf und Futterkörper reduziert sich die Spannkraft auf das Werkstück und somit auch die Reaktionskraft, die zur Durchmesservergrößerung des Futterkörpers führt. Somit kann die Veränderung des Durchmessers des Futterkörpers als Indikator für die auf das Werkstück ausgeübte Spannkraft herangezogen werden. Da die Durchmesserzunahme am Futterkörper verhältnismäßig gering ausfällt und eine Längenmessung in radialer Richtung aufwendiger ist, wird für eine exakte Bestimmung der Spannkraft eine Dehnung des Futterkörpers in Umfangsrichtung ermittelt. Diese Dehnung ist eindeutig mit der Durchmesserzunahme und somit mit der Spannkraft korreliert. Um die Dehnung in Umfangsrichtung zu ermitteln, ist an einer in Umfangsrichtung ausgerichteten Fläche des Futterkörpers ein Deformationssensor angebracht, der einen Rückschluss auf die Durchmesserveränderung und somit auf die Spannkraft des Spannkopfs auf das Werkstück ermöglicht.

In Ausgestaltung der Erfindung ist vorgesehen, dass der Deformationssensor an einer Außenoberfläche oder Außenseite bzw. Umfangsfläche des Grundkörpers angeordnet ist. An der Außenoberfläche oder Außenseite des Grundkörpers liegt die größte Deformation des Futterkörpers in Umfangsrichtung vor, die sich als Längenänderung darstellt. Damit können zur Ermittlung der Spannkraft relativ einfach gestaltete, aus der Längenmesstechnik bekannte Deformationssensoren eingesetzt werden, die trotz kostengünstiger Gestaltung und einfacher Anbringung ein präzises Messergebnis sicherstellen.

In weiterer Ausgestaltung der Erfindung ist vorgesehen, dass der Deformationssensor von außen zugänglich an der Außenoberfläche oder Außenseite des Grundkörpers angeordnet ist. Dies ermöglicht eine einfache Montage des Deformationssensors und stellt eine gute Zugänglichkeit für eine Fehlersuche oder eine gegebenenfalls notwendige Auswechslung sicher. Zudem muss für eine Wartung oder Reparatur des Deformationssensors keine Demontage des Spannfutters vorgenommen werden, so dass im Störungsfall eine schnelle und somit kostengünstige Abhilfe gewährleistet ist, was bei einer Bewertung einer Einsatzfähigkeit des Spannfutters eine positive Rolle spielt.

In weiterer Ausgestaltung der Erfindung ist vorgesehen, dass der Deformationssensor als Dehnmessstreifen mit dehnungsabhängigem elektrischen Widerstand ausgeführt ist. Ein Dehnmessstreifen weist insbesondere eine aus Polyimid hergestellte Trägerfolie auf, auf der ein vorzugsweise aus Konstantan hergestellter, drahtartiger Widerstand mäanderförmig aufgebracht ist. Durch die Verwendung von Polyimid lässt sich eine besonders temperaturunempfindliche Gestaltung der Trägerfolie gewährleisten. Die Verwendung von Konstantan als Material für den Widerstandsdraht stellt eine hohe Temperaturstabilität sicher, so dass für ein zuverlässiges Messergebnis nicht zwingend eine Temperaturkompensation durchgeführt werden muss.

Der Widerstandsdraht erfährt bei einer Ausdehnung oder Vergrößerung seiner Länge eine Verringerung seines Querschnitts, wodurch der elektrische Widerstand ansteigt. Bei Stauchung des Widerstandsdrahts erfolgt eine Querschnittsvergrößerung des elektrischen Leiters, so dass sich der elektrische Widerstand verringert. Diese dehnungsabhängigen Änderungen des elektrischen Widerstands werden vorzugsweise von einer dem Dehnungsmessstreifen nachgeschalteten Auswerteschaltung ermittelt und als Messsignal zur Verfügung gestellt.

In weiterer Ausgestaltung der Erfindung ist vorgesehen, dass dem Deformationssensor eine Informationsübertragungseinrichtung zugeordnet ist, die für eine drahtlose Signalübertragung, vorzugsweise über eine Funkverbindung, vom Deformationssensor auf eine Empfängereinrichtung gestaltet ist. Damit kann das Messsignal des Deformationssensors unkompliziert und ohne aufwendige Verkabelung an eine Empfängereinrichtung weitergegeben werden, die insbesondere an der Werkzeugmaschine angebracht ist. Durch die drahtlose Übertragung von Signalen kann der Futterkörper wie ein bekannter Futterkörper einfach ausgewechselt und gelagert werden.

In weiterer Ausgestaltung der Erfindung ist vorgesehen, dass dem Grundkörper eine Spuleneinrichtung für eine Energiewandlung nach dem Dynamoprinzip zur Bereitstellung elektrischer Energie für den Deformationssensor zugeordnet ist. Der Futterkörper ist typischerweise an einer Maschinenspindel, insbesondere einer Drehmaschine, aufgenommen, die für eine Bearbeitung des Werkstücks rotiert. Damit kann das Spannfutter relativ zur Werkzeugmaschine gedreht werden. Die Drehbewegung kann zur Erzeugung einer elektrischen Energie für den Deformationssensor genutzt werden. Dazu ist an der Werkzeugmaschine eine Magneteinrichtung, insbesondere mit Permanentmagneten oder Magnetspulen, angebracht, die für eine Erregung einer im Futterkörper vorgesehenen Spule vorgesehen ist. Durch die Relativbewegung der Spule in dem von der Magneteinrichtung hervorgerufenen Magnetfeld wird in der Spule eine elektrische Spannung induziert für eine Energieversorgung des Deformationssensors und gegebenenfalls einer nachgeschalteten Auswerteeinrichtung.

In weiterer Ausgestaltung der Erfindung ist vorgesehen, dass dem Grundkörper eine Energiespeichereinrichtung wie eine Batterie oder ein Kondensator zur Bereitstellung elektrischer Energie für den Deformationssensor zugeordnet ist. Damit kann in einfacher Weise eine Versorgung des Deformationssensors mit elektrischer Energie gewährleistet werden. Eine derartige Energieversorgung ist vollständig autark.

In weiterer Ausgestaltung der Erfindung ist vorgesehen, dass die Informationsübertragungseinrichtung als RFID-Transponder für eine Datenübertragung über ein induktives Nahfeld oder ein elektromagnetisches Fernfeld gestaltet ist. Bei einem RFID-Transponder handelt es sich um eine Einrichtung, die mit Hilfe der sogenannten Radio Frequency Identification eine Übertragung von Daten wie Messsignalen ermöglicht. Dazu ist ein induktives Nahfeld oder ein elektromagnetisches Fernfeld notwendig, das von einer Sendeeinrichtung wie der Werkzeugmaschine zur Verfügung gestellt wird. Vorteilhafterweise wird das Feld von einem von der Werkzeugmaschine separaten Gerät erzeugt. Dieses kann jeweils unabhängig von der Maschine arbeiten, was die Verwendbarkeit von mit RFID-Transpondern und/oder mit anderen Signalübertragungseinrichtungen ausgestatteten Futtern erleichtert.

Der RFID-Transponder weist eine Antenne auf, die das eingestrahlte elektromagnetische Feld empfangen und in vorgebbarer Weise schwächen kann. Dadurch kann einerseits elektrische Energie für den Betrieb des Deformationssensors zur Verfügung gestellt werden, insbesondere auch für seine Auswertung, andererseits kann durch eine gezielte Störung des elektromagnetischen Feldes und eine Analyse der Feldstörung auch eine Signalübertragung vom Deformationssensor zur Sendeeinrichtung verwirklicht werden. RFID-Transponder werden insbesondere in der Form von Etiketten bzw. Klebeetiketten bereitgestellt, in denen die gesamte Schaltung inklusive des Deformationssensors und der Antenne integriert ist und die lediglich auf die Außenoberfläche des Futterkörpers aufgeklebt werden müssen.

In weiterer Ausgestaltung der Erfindung ist vorgesehen, dass ein Bewegungssensor, insbesondere ein Beschleunigungssensor, vorgesehen ist, um eine Rotationsbewegung des Grundkörpers oder des Futterkörpers, insbesondere eine Rotationsgeschwindigkeit, zu ermitteln. Bei einer ersten Ausführungsform der Erfindung ist ein einfach gestalteter Bewegungssensor vorgesehen, der den Stillstand und die Bewegung des Futterkörpers zu ermitteln vermag, jedoch keine Information über eine Bewegungsgeschwindigkeit liefert. Mit einem derartigen Aufbau kann eine Spannkraft des Spannkopfs im Stillstand und während der Bewegung des Spannfutters ermittelt werden und eine Reduktion der Spannkraft zwischen diesen beiden Betriebszuständen ermittelt werden. Die Spannkraft des Spannfutters wird bei zunehmender Rotationsgeschwindigkeit durch die radial nach außen gerichteten Fliehkräfte oder Zentrifugalkräfte, die an den Spannbacken sowie am Futterkörper angreifen, reduziert. Daher ist eine Information über die Drehzahl des Futterkörpers, die in Korrelation mit der ermittelten Deformation des Futterkörpers gesetzt werden kann, von besonderem Interesse. Dazu kann am Futterkörper ein Beschleunigungssensor vorgesehen werden für eine Drehzahlermittlung des Spannfutters unabhängig von der Werkzeugmaschine.

In weiterer Ausgestaltung der Erfindung ist vorgesehen, dass am Grundkörper zumindest ein weiterer Deformationssensor für eine Ermittlung einer auf den Grundkörper einwirkenden Axialkraft zugeordnet ist. Damit steht eine zusätzliche Kenngröße zur Verfügung, die mit der ermittelten Deformation des Futterkörpers in radialer Richtung und gegebenenfalls mit der Drehzahl des Futterkörpers während der Bearbeitung des Werkstücks in Korrelation gesetzt werden kann und die eine besonders exakte Bestimmung der Spannkraft für das Werkstück ermöglicht.

Es ist ein Spannfutter mit einem Futterkörper mit mindestens einem der vorgenannten Merkmale sowie mit einem im Futterkörper aufnehmbaren Spannkopf vorgesehen. Dabei weist der Spannkopf mehrere durch Trennschlitze voneinander beabstandete Spannbacken auf, die mittels elastischer Verbindungselemente relativbeweglich miteinander verbunden sind und der für die Einspannung eines Werkstücks vorgesehen ist. Mit einem solchen Spannfutter kann eine zyklusunabhängige und bedarfsgerechte Wartung des Spannkopfes und des Futterkörpers in Abhängigkeit von der tatsächlichen Spannkraft sichergestellt werden. Das Spannfutter kann zusammen mit einer Empfängereinrichtung eine aus der Deformation des Futterkörpers abgeleitete Information über die Spannkraft am Werkstück und somit über den Wartungszustand des Spannfutters zur Verfügung stellen, ohne dass eine Demontage des Spannkopfes aus dem Futterkörper notwendig ist. Die Erfindung ist allgemein bei Spannfuttern anwendbar. Besonders vorteilhaft kann sie bei einem Axialzug-Spannfutter angewendet werden.

Gemäß der Erfindung ist ein Verfahren zur Ermittlung einer Spannkraft an einem Spannfutter, das an einer Maschinenspindel einer Werkzeugmaschine angebracht ist, mit Schritten wie folgt vorgesehen: Ermitteln einer Deformation eines Futterkörpers mittels eines Deformationssensors bei Stillstand der Maschinenspindel mit eingespanntem Werkstück, Ermitteln einer Deformation des Futterkörpers bei einer Rotationsbewegung der Maschinenspindel mit eingespanntem Werkstück, Errechnen einer Deformationsdifferenz zwischen Stillstand und Rotationsbewegung und Ausgabe und/oder Anzeige der Deformationsdifferenz und/oder Vergleich der Deformationsdifferenz mit einer Wertetabelle und Ausgabe eines Signals bei Unterschreiten eines Sollwerts.

Durch dieses Verfahren wird eine bei der Rotation des Spannfutters vorliegende und für die Bearbeitung des Werkstücks maßgebliche Spannkraft ermittelt. Diese Spannkraft kann deutlich von der Spannkraft im Stillstand abweichen, was insbesondere durch die auftretenden Fliehkräfte bewirkt werden kann. Andererseits können auch Setzvorgänge und Gleitvorgänge zwischen Spannkopf und Futterkörper, die durch die Rotation hervorgerufen werden können, auftreten, die einen zumindest teilweisen Ausgleich der fliehkraftabhängigen Spannkraftreduzierung bewirken können. Das Verfahren ermöglicht die Ermittlung einer tatsächlich vorliegenden Spannkraft auf das Werkstück.

In weiterer Ausgestaltung der Erfindung ist vorgesehen, dass nach Durchführung von Wartungsarbeiten am Spannfutter eine Kalibrierung des Deformationssensors vorgenommen wird. Bei Wartungsarbeiten wird typischerweise eine Reinigung und Schmierung des Spannkopfs und des Futterkörpers vorgenommen, so dass danach ein vorteilhaftes Zusammenwirken von Spannkopf und Futterkörper mit geringer Reibung und daraus resultierender hoher Spannkraft für das Werkstück gewährleistet ist. Diese Ausgangssituation dient zur Kalibrierung des Deformationssensors und die bei eingespanntem Werkstück erzielte Deformation des Futterkörpers wird durch den Deformationssensor ermittelt und gespeichert. Die nach Durchführung von mehreren Bearbeitungszyklen auftretende Verringerung der Spannkraft kann somit als Abweichung von der ursprünglich verfügbaren Spannkraft ermittelt werden und somit unmittelbar zur Beurteilung des Wartungszustands des Spannfutters dienen.

In weiterer Ausgestaltung der Erfindung ist vorgesehen, dass eine Übertragung von Messsignalen mit einer variablen Datenübertragungsrate in Abhängigkeit von einer Änderung des Messsignals vorgenommen wird, vorzugsweise mit geringer Datenübertragungsrate bei geringer oder keiner Änderung des Messsignals. Damit kann eine energiesparende Datenübertragung gewährleistet werden, was insbesondere für Energiespeicher von Interesse ist, die im Futterkörper integriert sind und die bei Erschöpfung der gespeicherten Energie ausgetauscht oder zumindest wieder aufgeladen werden müssen. Die Energieeinsparung kann vorzugsweise dadurch verwirklicht werden, dass bei konstantem Messsignal oder bei nur geringfügigen Änderungen des Messsignals eine geringe Datenübertragungsrate vorliegt, also pro Zeiteinheit nur wenige Messsignale übertragen werden. Bei starken Änderungen des Messsignals wird eine höhere Datenübertragungsrate verwirklicht, um eine ausreichende Auflösung der Änderungen zu gewährleisten. Dies ist besonders dann von Interesse, wenn die Empfängereinrichtung mit einer Maschinensteuerung der Werkzeugmaschine gekoppelt ist und bei Unterschreiten einer Mindestspannkraft die Werkzeugmaschine aus Sicherheitsgründen abgeschaltet werden soll.

In einer grundsätzlichen Ausgestaltung der Erfindung ist vorgesehen, dass eine in Umfangsrichtung ermittelte Deformation des Futterkörpers mit einer von der Werkzeugmaschine auf den Futterkörper ausgeübten Axialkraft korreliert wird, um einen Spannkraft-Wirkungsgrad des Spannfutters zu ermitteln. Der Spannkraft-Wirkungsgrad ist eine Kenngröße, die eine Zustandsaussage über das gesamte, aus Maschinenspindel, Zugrohr und Spannfutter gebildete Spannsystem zulässt. Unter der Voraussetzung, dass die von einer Stelleinrichtung auf das Zugrohr ausgeübte Zugkraft bekannt ist, kann durch Ermittlung der am Futterkörper vorliegenden Zugkraft bestimmt werden, ob das Zugrohr oder die Zugkraftübertragung zum Futterkörper mängelbehaftet sind. Durch die Korrelation der Zugkraft mit der Spannkraft des Spannkopfs kann ermittelt werden, in welchem Verhältnis die auf den Spannkopf eingeleitete Zugkraft und die daraus resultierende Spannkraft liegen, woraus eine präzise Angabe über den Wartungszustand des Spannfutters abgeleitet werden kann. Bei einer vorteilhaften Ausführungsform der Erfindung wird zeitweise anstelle des Werkstücks ein Spannkraft-Aufnehmer in den Spannkopf eingesetzt, um die tatsächliche Spannkraft zu ermitteln und somit einen ggf. notwendigen Korrekturfaktor für die über die Futterkörper-Deformation ermittelte Spannkraft zu errechnen.

In einer anderen grundsätzlichen Ausgestaltung der Erfindung ist vorgesehen, dass eine Steuerung oder Regelung einer auf das Spannfutter ausgeübten Axial-Zugkraft vorgenommen wird in Abhängigkeit der in Umfangsrichtung ermittelten Deformation des Futterkörpers, insbesondere in Abhängigkeit des Spannkraft-Wirkungsgrads des Spannfutters. Damit kann eine zumindest teilweise Kompensation der in Abhängigkeit vom Wartungszustand des Spannfutters auftretenden Spannkraftverringerung durch Erhöhung der vom Zugrohr ausgeübten Zugkraft vorgenommen werden.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### Kurzbeschreibung der Zeichnungen

Ein Ausführungsbeispiel der Erfindung ist in den Zeichnungen schematisch dargestellt und wird im folgenden näher erläutert. In den Zeichnungen zeigt:
- Fig. 1: eine Vorderansicht eines Spannfutters mit einem im Futterkörper integrierten Deformationssensor sowie mit einem am Futterkör- per angebrachten Deformationssensor,
- Fig. 2: eine Schnittdarstellung des Spannfutters gemäß der Fig. 1
- Fig. 3: ein Diagramm mit dem Verlauf der Spannkraft und der Dehnung des Grundkörpers über der Drehzahl bei konstanter Spannkraft,
- Fig. 4: ein Diagramm mit dem Verlauf der Spannkraft über einer Benut- zungsdauer eines Spannfutters bei konstanter Spannkraft.

### Detaillierte Beschreibung der Ausführungsbeispiele

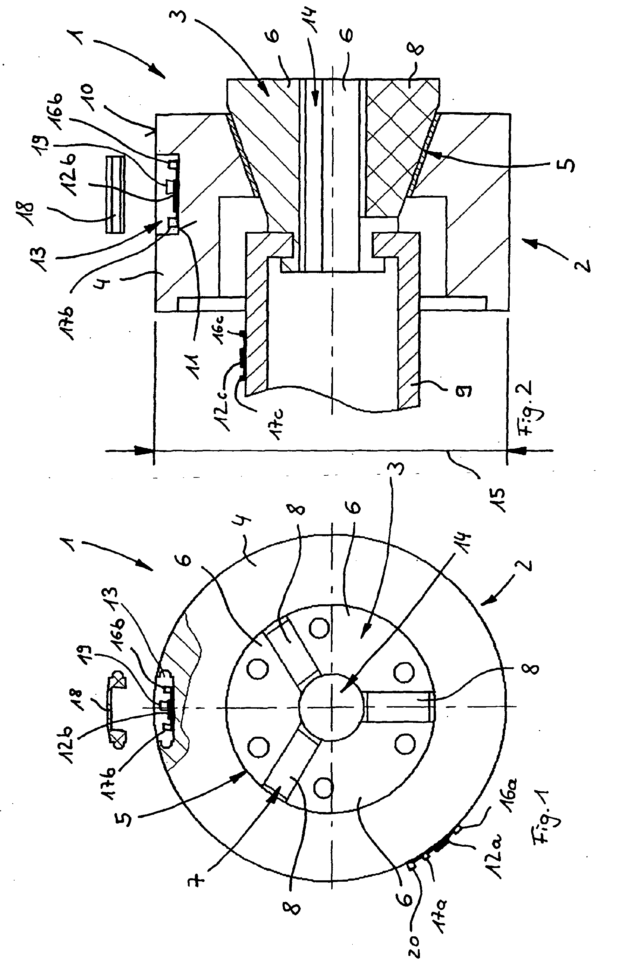

In den Fig. 1 und 2 ist ein Spannfutter 1 dargestellt, das zum Spannen eines vorzugsweise zylindrisch gestalteten Werkstücks nach Art einer Spannzange gestaltet ist. Das Spannfutter 1 weist einen im Wesentlichen rotationssymmetrisch gestalteten Grundkörper 4 auf, der einen wesentlichen Teil eines Futterkörpers 2 bildet. An dem Grundkörper 4 ist eine konusabschnittsförmig gestaltete Aufnahmeöffnung 5 vorgesehen, die für eine kraftübertragende Aufnahme eines Spannkopfs 3 gestaltet ist. Der Spannkopf 3 ist aus drei Spannbacken 6 aufgebaut, die durch Trennschlitze 7 voneinander beabstandet sind, wobei die Trennschlitze 7 bereichsweise durch elastische Verbindungselemente 8 überbrückt werden, die die Spannbacken 6 stoffschlüssig und relativbeweglich miteinander verbunden. An einem verjüngt ausgeführten Endbereich des Spannkopfs 3 sind die Spannbacken 6 mit einer umlaufenden Nut versehen, in die ein Zugrohr 9 eingreifen kann, das Teil einer nicht dargestellten Maschinenspindel ist und das eine Zugkraft auf das Spannfutter 3 ausüben kann.

An einer Außenoberfläche 10 ist ein Deformationssensor 12a vorgesehen. In einer taschenartigen Vertiefung 13 ist ein weiterer Deformationssensor 12b auf einer Außenfläche des Grundkörpers 4 vorgesehen. Weiterhin ist gemäß der Fig. 2 auch auf dem Zugrohr 9 ein Deformationssensor 12c zur Ermittlung einer Zugkraft angebracht.

Alle dargestellten Deformationssensoren 12a, 12b, 12c sind als Dehnmessstreifen ausgeführt und jeweils mit einer integrierten Signalverarbeitungseinheit 16a, 16b, 16c ausgerüstet für eine Aufbereitung der vom Dehnmessstreifen 12a, 12b, 12c erzeugten elektrischen Widerstandswerte anhand von Berechnungsalgorithmen. Der Signalverarbeitungseinheit 16a, 16b, 16c ist eine ebenfalls in den Deformationssensor 12a, 12b, 12c integrierte Informationsübertragungseinrichtung 17a, 17b, 17c zugeordnet für eine drahtlose Übertragung der errechneten. Messwerte. Dem in der Vertiefung 13 aufgenommenen Deformationssensor 12b ist eine Knopfzellenbatterie 19 als Energiespeicher zugeordnet für eine kontinuierliche Signalübertragung zu einer nicht dargestellten Empfangseinrichtung. Die Vertiefung 13 ist durch einen Stopfen 18 aus einem Elastomer verschlossen.

Die übrigen Deformationssensoren 12a, 12c, die ergänzend oder alternativ vorgesehen sein können, sind als RFID-Etiketten ausgeführt und auf die Außenoberfläche 10 und das Zugrohr 9 aufgeklebt und werden von einer nicht dargestellten, externen Energiequelle versorgt, die an der Werkzeugmaschine oder an einer anderen Stelle in einem Raum angeordnet sein kann. Der Deformationssensor 12a ist mit einem als Beschleunigungssensor 20 ausgeführten, integrierten Bewegungssensor versehen, der für eine Detektion einer Bewegung des Spannfutters vorgesehen ist und der in gleicher Weise auch an den anderen Deformationssensoren 12b oder 12c angebracht werden kann.

Die Deformationssensoren 12a, 12b auf der Außenoberfläche 10 und in der Vertiefung 13 sind für eine Ermittlung einer Deformation des Umfangs des Grundkörpers 2 vorgesehen. Eine solche Deformation kann auftreten, wenn ein Werkstück in die von den Spannbacken 6 begrenzte Aufnahmebohrung 14 eingesetzt wird und anschließend vom Zugrohr 9 eine Zugkraft in die Spannbacken 6 eingeleitet wird. Dadurch wird der Spannkopf 3 in Richtung des Zugrohrs 9 bewegt, wobei es durch die konusförmige Gestaltung der Aufnahmeöffnung 5 und des Spannkopfs 3 zu einer radial nach innen gerichteten Ausweichbewegung der zueinander relativbeweglichen Spannbacken 6 kommt. Dadurch kann das Werkstück zwischen den Spannbacken 6 geklemmt werden.

Die durch die Zugkraft des Zugrohrs 9 bewirkte Relativbewegung der Spannbacken 6 führt bei Klemmung des Werkstücks zu einer radial nach außen gerichteten Abstützkraft der Außenflächen der Spannbacken 6 auf die Aufnahmeöffnung 5. Dadurch wird der Grundkörper 4 in radialer Richtung nach außen gedehnt und erfährt eine Vergrößerung des Außendurchmessers 15, die im Wesentlichen proportional zur ausgeübten Spannkraft ist. Die Vergrößerung des Außendurchmessers 15 geht mit einer Längenänderung des Umfangs des Grundkörpers 4 einher. Diese Längenänderung kann durch die an der Außenoberfläche 10 und der Außenfläche 11 angebrachten Deformationssensoren 12a, 12b ermittelt werden.

Bei Aufbringung einer Zugkraft auf das Spannfutter 1 mittels des Zugrohrs 9, die als bekannt vorausgesetzt werden kann oder die vom Deformationssensor 12c am Zugrohr 9 ermittelt wird, ergibt sich bei frisch gewartetem Spannfutter 1 eine Maximalspannkraft und eine daraus resultierende maximale Vergrößerung des Außendurchmessers 15 und des Umfangs des Grundkörpers 4. Der Maximalwert für den Umfang des Grundkörpers 4 wird als Referenzwert in der Signalverarbeitungseinheit 16a, 16b, 16c und/oder in der Empfangseinheit gespeichert und kann somit als Referenz für weitere Spannzyklen des Spannfutters 1 herangezogen werden.

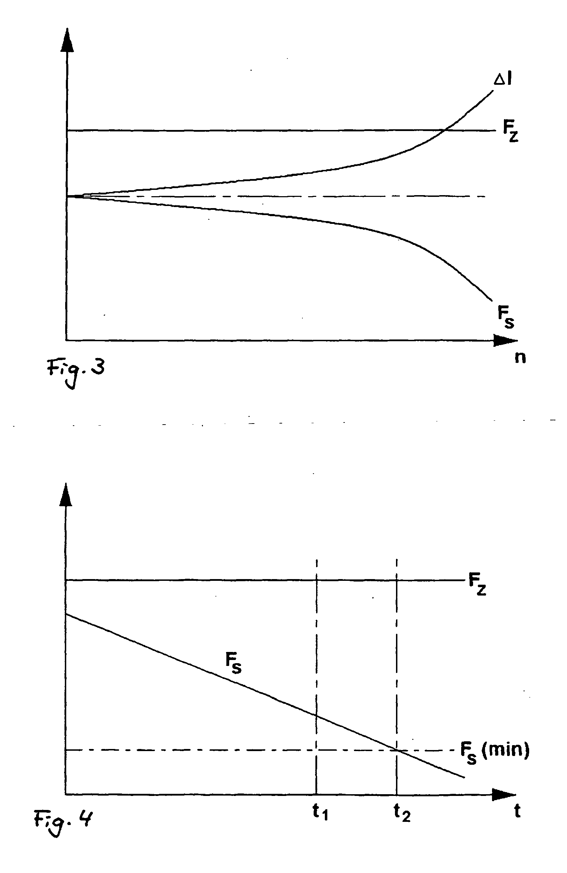

Bei dem in Fig. 3 dargestellten Verlauf der vom Deformationssensor 12a am Außenumfang des Futterkörpers ermittelten Deformation Δl und der korrelierten, durch Spiegelung der Deformationskurve ermittelten Spannkraft Fₛ über der Drehzahl n des Spannfutters bei einer Bearbeitung eines Werkstücks ist erkennbar, dass sich die Deformation und die Spannkraft Fₛ zunächst nur geringfügig verändern. Bei zunehmender Drehzahl liegt jedoch ein immer stärkerer Abfall der Spannkraft Fₛ vor, der bis zu einem vollständigen Spannkraftverlust führen kann.

Bei dem in Fig. 4 dargestellten Verlauf der Spannkraft Fₛ über der Zeit t ist zu erkennen, dass mit zunehmender Anzahl von durchgeführten Bearbeitungszyklen, also typischerweise im Bereich von Wochen, eine exemplarisch dargestellte Abnahme der Spannkraft Fₛ trotz konstanter Zugkraft F_{z} stattfindet. Diese Reduktion der Spannkraft Fₛ ist in erster Linie durch die vorstehend bereits beschriebenen Alterungseffekte und die Verschmutzung des oder der zwischen Spannkopf und Grundkörper vorgesehenen Schmierstoffe zurückzuführen und führt bei Versäumen einer Wartung des Spannfutters zu einem Unterschreiten einer Mindestspannkraft Fₛ (min), bei der eine sichere Bearbeitung eines Werkstücks gerade noch gewährleistet ist.

Um der Gefahr einer zu geringen Spannkraft Fₛ aus dem Weg zu gehen, wird eine Wartung des Spannfutters typischerweise zu einem Zeitpunkt t1 vorgenommen werden, zu dem noch eine Reserve bis zum Erreichen der Mindestspannkraft Fₛ (min) vorliegt. Durch Verwendung des erfindungsgemäßen Verfahrens zur Spannkraftermittlung kann die Wartung des Spannfutters exakt zum Zeitpunkt des Erreichens der Minimalspannkraft Fₛ (min) durchgeführt werden, so dass eine größere Anzahl von Bearbeitungszyklen zwischen zwei Wartungszyklen verwirklicht werden kann und dennoch eine dynamische Wartung des Spannfutters in Abhängigkeit von sich gegebenenfalls ändernden Umgebungsbedingungen durchgeführt werden kann.

## Patentansprüche

1. Verfahren zur Ermittlung einer Spannkraft an einem Spannfutter (1) mit einem Futterkörper (2) für das Spannfutter (1) zum Spannen eines Werkstücks, mit einem im Wesentlichen rotationssymmetrisch gestalteten Grundkörper (4), an dem eine konusabschnittsförmig gestaltete Aufnahmeöffnung (5) vorgesehen ist, die für eine kraftübertragende Aufnahme eines Spannkopfs (3) gestaltet ist, wobei am Grundkörper (4) ein Deformationssensor (12a, 12b, 12c) angebracht ist, der für eine Ermittlung einer Deformation des Grundkörpers (4) in einer Umfangsrichtung vorgesehen und ausgebildet ist, sowie mit einem im Futterkörper (2) aufnehmbaren Spannkopf (3), der mehrere durch Trennschlitze (7) voneinander beabstandete Spannbacken (6) aufweist, die mittels elastischer Verbindungselemente (8) relativbeweglich miteinander verbunden sind und der für die Einspannung eines Werkstücks vorgesehen ist, wobei das Spannfutter (1) an einer Maschinenspindel einer Werkzeugmaschine angebracht ist, mit den Schritten:
- Ermitteln einer Deformation eines Futterkörpers (2) mittels eines Deformationssensors (12a, 12b, 12c) bei Stillstand der Maschinenspindel mit eingespanntem Werkstück,
- Ermitteln einer Deformation des Futterkörpers (2) bei einer Rotationsbewegung der Maschinenspindel mit eingespanntem Werkstück,
- Errechnen einer Deformationsdifferenz zwischen Stillstand und Rotationsbewegung
- Ausgabe und/oder Anzeige der Deformationsdifferenz und/oder Vergleich der Deformationsdifferenz mit einer Wertetabelle und Ausgabe eines Signals bei Unterschreiten eines Sollwerts,
- Ermitteln einer von der Werkzeugmaschine auf den Futterkörper (2) ausgeübten Axialkraft
wobei eine in Umfangsrichtung ermittelte Deformation des Futterkörpers (2) mit der ermittelten Axialkraft korreliert wird, um einen Spannkraft-Wirkungsgrad des Spannfutters zu ermitteln.

2. Verfahren zur Ermittlung einer Spannkraft an einem Spannfutter (1) mit einem Futterkörper (2) für das Spannfutter (1) zum Spannen eines Werkstücks, mit einem im Wesentlichen rotationssymmetrisch gestalteten Grundkörper (4), an dem eine konusabschnittsförmig gestaltete Aufnahmeöffnung (5) vorgesehen ist, die für eine kraftübertragende Aufnahme eines Spannkopfs (3) gestaltet ist, wobei am Grundkörper (4) ein Deformationssensor (12a, 12b, 12c) angebracht ist, der für eine Ermittlung einer Deformation des Grundkörpers (4) in einer Umfangsrichtung vorgesehen und ausgebildet ist, sowie mit einem im Futterkörper (2) aufnehmbaren Spannkopf (3), der mehrere durch Trennschlitze (7) voneinander beabstandete Spannbacken (6) aufweist, die mittels elastischer Verbindungselemente (8) relativbeweglich miteinander verbunden sind und der für die Einspannung eines Werkstücks vorgesehen ist, wobei das Spannfutter (1) an einer Maschinenspindel einer Werkzeugmaschine angebracht ist, mit den Schritten:
- Ermitteln einer Deformation eines Futterkörpers (2) mittels eines Deformationssensors (12a, 12b, 12c) bei Stillstand der Maschinenspindel mit eingespanntem Werkstück,
- Ermitteln einer Deformation des Futterkörpers (2) bei einer Rotationsbewegung der Maschinenspindel mit eingespanntem Werkstück,
- Errechnen einer Deformationsdifferenz zwischen Stillstand und Rotationsbewegung
- Ausgabe und/oder Anzeige der Deformationsdifferenz und/oder Vergleich der Deformationsdifferenz mit einer Wertetabelle und Ausgabe eines Signals bei Unterschreiten eines Sollwerts,
- Ermitteln einer von der Werkzeugmaschine auf den Futterkörper (2) ausgeübten Axialkraft wobei eine Steuerung oder Regelung einer auf das Spannfutter (1) ausgeübten Axial-Zugkraft in Abhängigkeit der in Umfangsrichtung ermittelten Deformation des Futterkörpers (2), insbesondere in Abhängigkeit des Spannkraft-Wirkungsgrads des Spannfutters (1), vorgenommen wird.

3. Verfahren nach Anspruch 1 oder 2, **dadurch gekennzeichnet, dass** eine Kalibrierung des Deformationssensors (12a, 12b, 12c) nach Durchführung von Wartungsarbeiten am Spannfutter (1) vorgenommen wird.

4. Verfahren nach einem der vorhergehenden Ansprüche, **dadurch gekennzeichnet, dass** eine Übertragung von Messignalen mit einer variablen Datenübertragungsrate in Abhängigkeit von einer Änderung des Messsignals vorgenommen wird, vorzugsweise mit geringer Datenübertragungsrate bei geringer Änderung des Messsignals.

## Claims

1. A method for determining a clamping force on a chuck (1) having a chuck body (2) for said chuck (1) for clamping a workpiece, said chuck body having a substantially rotationally symmetrically formed basic body (4), said basic body being provided with a cone portion-shaped receiving opening (5) designed for a force-transferring reception of a clamping head (3), a deformation sensor (12a, 12b, 12c) being fitted to said basic body (4), said deformation sensor being provided and constructed for determination of a deformation of said basic body (4) in a circumferential direction, and having a clamping head (3) received in said chuck body (2), said clamping head having several clamping jaws (6) mutually spaced by separation slots (7), said clamping jaws being interconnected in relatively movable manner by elastic connecting elements (8) between them, and said clamping head being provided for fixing a workpiece, said chuck (1) being fitted to a machine spindle of a machine tool, with the steps of:
- determining a deformation of a chuck body (2) by means of a deformation sensor (12a, 12b, 12c) with said machine spindle being held in a stationary state and said workpiece being held fixed,
- determining a deformation of said chuck body (2) during a rotary movement of said machine spindle and with said workpiece fixed,
- calculating a deformation difference between said stationary state and said rotary movement,
- outputting and/or displaying said deformation difference and/or comparing said deformation difference with a value table and outputting a signal on dropping below a desired value,
- determining an axial force exerted by said machine tool on said chuck body (2),
wherein a circumferentially determined deformation of said chuck body (2) is correlated with the determined axial force in order to establish a clamping force efficiency of said chuck.

2. A method for determining a clamping force on a chuck (1) having a chuck body (2) for said chuck (1) for clamping a workpiece, said chuck body having a substantially rotationally symmetrically formed basic body (4), said basic body being provided with a cone portion-shaped receiving opening (5) designed for a force-transferring reception of a clamping head (3), a deformation sensor (12a, 12b, 12c) being fitted to said basic body (4), said deformation sensor being provided and constructed for determination of a deformation of said basic body (4) in a circumferential direction, and having a clamping head (3) received in said chuck body (2), said clamping head having several clamping jaws (6) mutually spaced by separation slots (7), said clamping jaws being interconnected in relatively movable manner by elastic connecting elements (8) between them, and said clamping head being provided for fixing a workpiece, said chuck (1) being fitted to a machine spindle of a machine tool, with the steps of:
- determining a deformation of a chuck body (2) by means of a deformation sensor (12a, 12b, 12c) with said machine spindle being held in a stationary state and said workpiece being held fixed,
- determining a deformation of said chuck body (2) during a rotary movement of said machine spindle and with said workpiece fixed,
- calculating a deformation difference between said stationary state and said rotary movement,
- outputting and/or displaying said deformation difference and/or comparing said deformation difference with a value table and outputting a signal on dropping below a desired value,
- determining an axial force exerted by said machine tool on said chuck body (2),
wherein a control or regulation of an axial tensile force exerted on said chuck (1) is carried out as a function of said circumferentially determined deformation of said chuck body (2), in particular as a function of said clamping force efficiency of said chuck (1).

3. The method according to claim 1 or 2, **characterized in that** said deformation sensor (12a, 12b, 12c) is calibrated after carrying out of maintenance work on said chuck (1).

4. The method according to any of the preceding claims, **characterized in that** measurement signals are transmitted with a variable data transmission rate as a function of a measurement signal change, preferably with a low data transmission rate with a limited measurement signal change.

## Revendications

1. Procédé pour la détermination d'une force de serrage sur un mandrin de serrage (1), avec un corps de mandrin (2) pour le mandrin de serrage (1) pour serrer une pièce à usiner, avec un corps de base (4) formé essentiellement de manière à présenter une symétrie de révolution, sur lequel on prévoit une ouverture de logement (5) présentant la forme d'une section de cône, qui est réalisée pour le logement transmetteur de force d'une tête de serrage (3), sachant qu'un détecteur de déformation (12a, 12b, 12c) est appliqué au corps de base (4), qui est prévu et réalisé pour la détermination d'une déformation du corps de base (4) dans une direction circonférentielle, ainsi qu'avec une tête de serrage (3) qui peut être logée dans le corps de mandrin (2) et qui présente plusieurs mâchoires de serrage (6) espacées par des fentes de séparation (7), lesquelles sont jointes entre elles par des éléments de raccordement (8) élastiques tout en permettant un mouvement relatif, et qui est prévue pour le serrage d'une pièce à usiner, sachant que le mandrin de serrage (1) est appliqué à une broche de machine d'une machine-outil, présentant les pas suivants :
- détermination d'une déformation d'un corps de mandrin (2) au moyen d'un détecteur de déformation (12a, 12b, 12c) pendant un arrêt de marche de la broche de machine et pendant que la pièce à usiner est immobilisée,
- détermination d'une déformation du corps de mandrin (2) pendant un mouvement rotatif de la broche de machine et pendant que la pièce à usiner est immobilisée,
- calcul d'une différence de déformation entre l'arrêt de marche et le mouvement rotatif
- sortie et/ou visualisation de la différence de déformation et/ou comparaison de la différence de déformation avec un tableau de valeurs et sortie d'un signal au cas d'un dépassement négatif d'une valeur prescrite,
- détermination d'une force axiale exercée par la machine-outil sur le corps de mandrin (2),
sachant qu'une déformation du corps de mandrin (2) déterminée en direction circonférentielle est corrélée avec la force axiale déterminée pour déterminer un degré d'efficacité de la force de serrage du mandrin de serrage.

2. Procédé pour la détermination d'une force de serrage sur un mandrin de serrage (1), avec un corps de mandrin (2) pour le mandrin de serrage (1) pour serrer une pièce à usiner, avec un corps de base (4) formé essentiellement de manière à présenter une symétrie de révolution, sur lequel on prévoit une ouverture de logement (5) présentant la forme d'une section de cône, qui est réalisée pour le logement transmetteur de force d'une tête de serrage (3), sachant qu'un détecteur de déformation (12a, 12b, 12c) est appliqué au corps de base (4), qui est prévu et réalisé pour la détermination d'une déformation du corps de base (4) dans une direction circonférentielle, ainsi qu'avec une tête de serrage (3) qui peut être logée dans le corps de mandrin (2) et qui présente plusieurs mâchoires de serrage (6) espacées par des fentes de séparation (7), lesquelles sont jointes entre elles par des éléments de raccordement (8) élastiques tout en permettant un mouvement relatif, et qui est prévue pour le serrage d'une pièce à usiner, sachant que le mandrin de serrage (1) est appliqué à une broche de machine d'une machine-outil, présentant les pas suivants :
- détermination d'une déformation d'un corps de mandrin (2) au moyen d'un détecteur de déformation (12a, 12b, 12c) pendant un arrêt de marche de la broche de machine et pendant que la pièce à usiner est immobilisée,
- détermination d'une déformation du corps de mandrin (2) pendant un mouvement rotatif de la broche de machine et pendant que la pièce à usiner est immobilisée,
- calcul d'une différence de déformation entre l'arrêt de marche et le mouvement rotatif
- sortie et/ou visualisation de la différence de déformation et/ou comparaison de la différence de déformation avec un tableau de valeurs et sortie d'un signal au cas d'un dépassement négatif d'une valeur prescrite,
- détermination d'une force axiale exercée par la machine-outil sur le corps de mandrin (2),
sachant qu'on effectue une commande ou un réglage de la force axiale de traction exercée sur le mandrin de serrage (1) en fonction de la déformation du corps de mandrin (2) déterminée en direction de circonférence, notamment en fonction du degré d'efficacité de la force de serrage du mandrin de serrage (1).

3. Procédé d'après la revendication 1 ou 2, **caractérisé en ce qu'**on effectue un calibrage du détecteur de déformation (12a, 12b, 12c) après l'exécution d'opérations de maintenance du mandrin de serrage (1).

4. Procédé d'après une des revendications précédentes, **caractérisé en ce qu'**on effectue une transmission de signaux de mesure avec un débit de transmission de données variable en fonction d'un changement du signal de mesure, de préférence avec un faible débit de transmission de données quand le changement du signal de mesure est peu important.
